# EUROPÄISCHE PATENTSCHRIFT

(11) **EP 2 781 780 B1**
(45) Veröffentlichungstag und Bekanntmachung des Hinweises auf die Patenterteilung: **15.01.2020**
(21) Anmeldenummer: 13005846.4
(22) Anmeldetag: 16.12.2013
(51) Int. Cl.: F16D 3/68

(54) **Elastische Wellenkupplung**
Elastic shaft coupling
Accouplement d'arbre élastique

(30) Priorität: 18.03.2013 DE 102013004583
(43) Veröffentlichungstag der Anmeldung: 24.09.2014
(73) Patentinhaber: Centa-Antriebe Kirschey GmbH, 42781 Haan (DE)
(72) Erfinder: Kirschey, Gerhard, 42329 Wuppertal (DE)
(74) Vertreter: V.O.

(56) Entgegenhaltungen:
- EP-A2- 0 937 902
- WO-A1-2011/088860
- DE-A1- 2 211 512
- DE-U1-202004 003 933
- DE-U1-202011 106 000

## Beschreibung

Die Erfindung betrifft eine Elastische Wellenkupplung mit einer ersten kreiszylindrischen Wellennabe, die über ihren radial weisenden Außenumfang verteilte und zueinander beabstandete erste Klauen trägt und mit einer zweiten kreiszylindrischen Wellennabe, die über ihren radial weisenden Außenumfang verteilte und zueinander beabstandete zweite Klauen trägt, wobei die ersten und zweiten Klauen durch Einsitzen in den jeweiligen Zwischenräumen ineinandergreifen und zwischen jeweils benachbarten Klauen ein elastisches Kupplungselement einsitzt.

Allgemein werden gattungsgemäße Kupplungen als Klauenkupplungen bezeichnet. Eine solche Kupplung ist in der DE 22 11 512 A dargestellt. Dort sind die Klauen integraler Bestandteil der Wellennaben. Sie springen aus der Wellennabe in Axialrichtung vor. Die elastischen Kupplungselemente, welche zwischen jeweils zwei benachbart angeordneten Klauen einliegen, sind rollen- bzw. walzenartig und über einen Elastomerring aneinander angeordnet.

Solche Klauenkupplungen sind in verschiedener Art und Weise weiterentwickelt worden. So offenbart die DE 298 06 632 U1 beispielsweise eine Lösung, Elastomerringe mit elastischen Kupplungselementen für Klauenkupplungen auf vorteilhafte Weise aus Einzelteilen zusammenzufügen. Die Anmelderin selbst vertreibt unter der Bezeichnung Centaflex B Klauenkupplungen, deren Klauen radial auf den Naben befestigt sind und eine einfache radiale Austauschbarkeit gewährleisten. Zwischen dem Außenumfang der Nabe und den der Nabe zugewandten Flächen der Klauen besteht eine reibschlüssige Verbindung. Auch bei dieser Kupplung sind die zwischen den Klauen angeordneten Elastomerelemente untereinander über einen Ringkörper verbunden.

Klauenkupplungen mit radial demontierbaren Klauen haben sich in der Praxis vielfach bewährt. Zunächst ist zur Montage und Demontage der Kupplung in der Regel ein axiales Auseinanderrücken der Aggregate nicht erforderlich. Zudem können bei Bedarf einzelne Klauen ausgetauscht werden. Sofern es das Material und die Anbindung erlaubt, lassen sich die elastischen Kupplungselemente durch Auftrennen des Ringes ebenfalls ohne axiale Aggregatverschiebung montieren.

FR 2 327 442 A offenbart eine Klauenkupplung, deren Klauen lösbar axial in einer Scheibe angeordnet sind, die an einer Wellennabe befestigt wird. Sie offenbart zudem elastische Kupplungskörper zum Einsatz zwischen den Klauen, die an einem gemeinsamen Ring festgelegt sind. Ein Austausch der Kupplungskörper oder der Klauen ist ohne eine axiale Trennung der Kupplungshälften nicht möglich.

DE 31 13 813 A1 zeigt eine Klauenkupplung, deren Klauen einerseits auf der Außenumfangsfläche der Nabe stoffschlüssig angeschweißt und andererseits an eine Axialfläche einer zweiten Nabe befestigt. einzelne Rollenkörper zwischen den Klauen dienen als Kupplungselemente. Auch bei dieser Kupplung können die Elastomere nur nach axialer Trennung und damit nach einem axialen Verrücken der Aggregate ausgetauscht werden.

BE 55 34 82 B zeigt ebenfalls eine Klauenkupplung. Die Klauen einer Nabe sind stoffschlüssig angeformt. Ein Ring, der zweite Klauen ausbildet, ist an einer Stirnfläche der zweiten Nabe mittels Schraubbolzen festgelegt. Zwischen den einzelnen Klauen sitzen einzelne Rollen als Kupplungselemente ein. Auch bei dieser Kupplung ist ein Tausch der Kupplungselemente nur nach einer axialen Trennung der Kupplungshälften möglich.

Aus der WO 2011/088860 A1 geht eine Keilpaketkupplung hervor. Es handelt sich hier um eine Kupplung vom sogenannten Sterntyp, bei der jede der beiden Wellennaben sternförmig oder fingerartig ausgebildet ist, und die beiden einander gegenüberliegenden Kupplungshälften umfangsversetzt und mit axialer Überlappung ineinander greifen. Wellennaben mit einem kreiszylindrischen Umfang sind hieraus nicht bekannt. Die Druckschrift offenbart, dass auf den sternförmigen Fortsätzen, die sich auch in Radialrichtung nach außen erstrecken, keilförmige Träger radial aufgeschraubt werden können, und jeweils zwischen sich Federpakete unter Vorspannung halten können. Eine elastische Wellenkupplung mit einer ersten kreiszylindrischen Wellennabe und einer zweiten kreiszylindrischen Wellennabe sind hieraus nicht bekannt.

Es hat sich jedoch herausgestellt, dass es sowohl beim Austausch von Verschleißteilen, insbesondere beim Austausch der elastischen Kupplungselemente, als auch bei der Herstellung gattungsgemäßer Klauenkupplungen Verbesserungspotenzial gibt. So lassen sich die elastischen Kupplungselemente nur in Ihrer Gesamtheit austauschen, da sie einstückig aneinander festgelegt sind. Die radial entnehmbaren Klauen sind für jeden Nabendurchmesser aufgrund der differierenden Nabenumfänge und für entsprechende Drehmomente spezifisch herzustellen.

Es ist Aufgabe der Erfindung diese Nachteile hinsichtlich des Fertigungsaufwandes sowie des Austausches von Verschleißteilen zu optimieren.

Gelöst wird die Aufgabe von einer Kupplung mit den Merkmalen des Anspruches 1, insbesondere mit den kennzeichnenden Merkmalen, wonach wenigstens die radiale weisende Außenumfangsfläche einer Nabe mit Montageflächen für die Klauen versehen ist, wobei die von der Nabe getragenen Klauen formschlüssig auf den nabenseitigen, radialen Montageflächen aufsitzen und wobei zumindest die erste Klaue radial entfernbar ist.

Der wesentliche Vorteil der Erfindung liegt darin, die Außenumfangsfläche der Wellennabe zu bearbeiten und mit einer Montagefläche zur Aufnahme der Klauen zu versehen. Diese Montageflächen für die Klauen sind über verschiedene Nabengrößen hinweg identisch, sodass die gleichen Klauen für Naben unterschiedlicher Durchmesser genutzt werden können. Auf diese Weise reduziert sich der Produktionsaufwand erheblich, da nicht für jeden Nabendurchmesser entsprechend angepasste Klauen vorgehalten werden müssen. Insoweit lässt sich jeder Nabenumfang der einem Vielfachen der Klauenumfangsbreite entspricht, mit den gleichen Klauen ausrüsten. In der Praxis bedeutet dies, dass Klauenkupplungen unterschiedlicher Leistungsfähigkeit unter Verwendung der gleichen Klauen allein durch die Anzahl der Klauen und deren Teilkreis herstellbar sind. So tragen in letzter Konsequenz Klauenkupplungen zur Übertragung kleiner Drehmomente die gleichen Klauen wie Kupplungen zur Übertragung großer Drehmomente. Die Kupplungen unterscheiden sich lediglich durch die Anzahl der Klauen und dem dem Teilkreis der Klauen angepassten Nabendurchmesser.

Insofern lassen sich in einfacher Weise eine Vielzahl unterschiedlicher Kupplungsgrößen aus wenigen, standardisierten Bauteilen herstellen. Dies vereinfacht Herstellung und Lagerhaltung erheblich.

In der Regel sind die Naben kreiszylindrisch, so dass die Außenumfangskontur im Bereich der Montageflächen von der kreiszylindrischen Umfangsstruktur abweichend ausgebildet ist.

Es ist insbesondere vorgesehen, dass die Montagefläche plan ausgebildet ist. Wobei bevorzugt vorgesehen ist, dass die Montagefläche eine Nut aufweist oder von einer Nut gebildet wird.

Die Ausbildung einer Planen Montagefläche mit einer Nut oder die Ausbildung einer nutartigen Montagefläche bietet optimale Voraussetzungen, um die Klauen formschlüssig zu tragen.

Um eine ideale Abstützung der Klauen auf der Nabe zu gewährleisten und somit die Drehmomentbelastung der Verbindung zwischen Klaue und Nabe zu optimieren, ist vorgesehen, dass die Klauen Aufstandsflächen aufweisen, die formkomplementär zu den nabenseitigen Montageflächen ausgebildet sind.

Besonders bevorzugt ist eine Ausführungsform, die sich dadurch kennzeichnet, dass die ersten Klauen schalenartige und zu einer Axialebene der Wellenkupplung spiegelbildlich angeordnete Halteausnehmungen aufweisen, die untereinander unverbundene elastische Kupplungselemente radial und/oder axial halten.

Diese Ausgestaltung ist eine Voraussetzung dafür, dass die verschleißbehafteten, elastischen Kupplungselemente einzeln austauschbar sind. Optimaler Weise geschieht dies dadurch, dass die haltende Klaue radial entfernt wird und so die von der Klaue gehaltenen elastischen Kupplungselemente zum Austausch zugänglich sind.

Vorgesehen ist weiter hin, dass die zweiten Klauen einen formangepassten Sitz für die elastischen Kupplungselemente ausbilden, insbesondere wenn die zweiten Klauen die elastischen Kupplungselemente in Umfangsrichtung in den Halteausnehmungen der ersten Kupplungselemente halten.

Diese Ausführungsform kennzeichnet sich dadurch, dass die zweiten Klauen mit Ausnahme der Halterung der elastischen Kupplungselemente in Umfangsrichtung keine darüber hinausgehende Haltefunktion aufweisen. Die Haltefunktion in Umfangsrichtung ist systemimmanent, da nur so das Abstützen der ersten und zweiten Klauen aneinander über die elastischen Kupplungselemente gewährleistet ist. Zusammenfassend bedeutet dies, dass eine radiale und axiale Halterung der untereinander unverbundenen elastischen Kupplungselemente ausschließlich durch die ersten Klauen gewährleistet ist.

Wenn sodann noch darauf geachtet wird, dass der radiale Öffnungswinkel der zweiten Klauen eine radiale Entnahme der ersten Klauen nebst der von Ihnen gehaltenen elastischen Kupplungselemente ermöglicht, muss zum Austausch der elastischen Kupplungselemente nur die erste Klaue radial entfernt werden.

In einer konkreten Ausführungsform ist deshalb vorgesehen, dass in einem Radialschnitt die ersten Klauen im Wesentlichen symmetrische Trapeze bilden und die zweiten Klauen im Wesentlichen stegartig ausgebildet sind und ihren geometrischen Ursprung in der Rotationsachse der Wellenkupplung haben.

Weitere Vorteile der Erfindung sowie ein besseres Verständnis derselben folgt aus der nachfolgenden Beschreibung eines Ausführungsbeispiels. Es zeigen:
- Figur 1:: Die Gesamtansicht einer erfindungsgemäßen Wellenkupplung,
- Figur 2:: eine axiale Teilansicht auf die Wellenkupplung gemäß Figur 1,
- Figur 3:: einen Axialschnitt gemäß Schnittlinie A - A in Figur 2 durch eine erste Klaue der Wellenkupplung gemäß Figur 1,

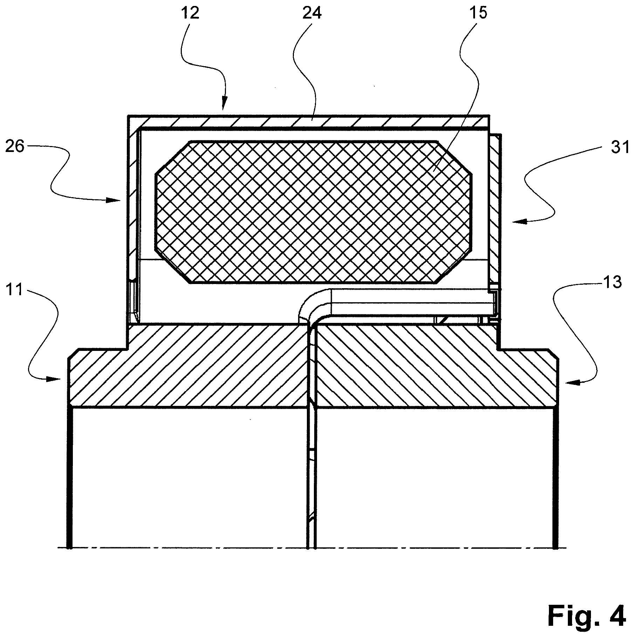

- Figur 4:: eine Axialschnittansicht gemäß Schnittlinie B - B in Figur 2 durch den in der ersten Klaue anliegenden elastischen Kupplungskörper der Wellenkupplung gemäß Figur 1,
- Figur 5:: eine axiale Schnittansicht gemäß Schnittlinie C - C in Figur 2 durch eine zweite Klaue der Wellenkupplung gemäß Figur 1,
- Figur 6:: die Anordnung von erster und zweiter Nabe der Wellenkupplung gemäß Figur 1 in Perspektive,
- Figur 7:: eine Darstellung der ersten Nabe mit ersten Klauen in Perspektive,
- Figur 8:: eine Darstellung der zweiten Nabe mit zweiten Klauen in Perspektive,
- Figur 9:: eine erste Klaue in Ansicht von unten,
- Figur 10:: eine zweite Klaue in Ansicht von unten,
- Figur 11:: eine perspektivische Gesamtansicht der Wellenkupplung gemäß Figur 1 in perspektivischer Ansicht.

In den Figuren ist eine Wellenkupplung entsprechend der Erfindung insgesamt mit der Bezugsziffer 10 versehen.

Diese Wellenkupplung umfasst zunächst eine erste Nabe 11 mit ersten Klauen 12 und sodann eine zweite Nabe 13 mit zweiten Klauen 14. Die ersten Klauen 12 sind außenumfänglich auf der ersten Nabe 11 angeordnet und hierbei gleichmäßig über den Außenumfang verteilt ausgerichtet. Ebenso sind die zweiten Klauen 14 außenumfänglich auf der zweiten Nabe 13 angeordnet und wiederum gleichmäßig über deren Außenumfang verteilt ausgerichtet.

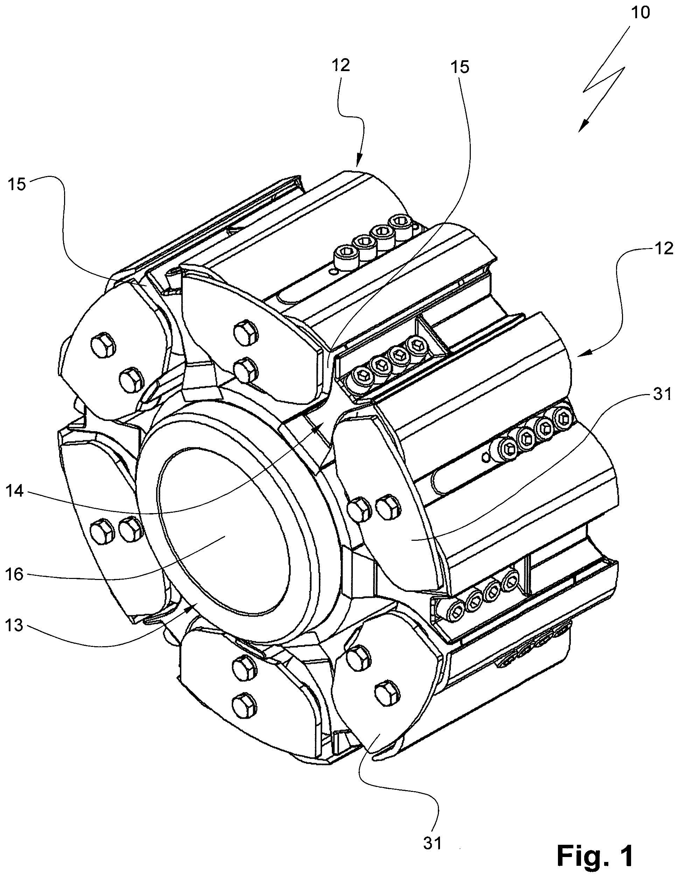

In Figur 1 greifen die ersten Klauen 12 und zweiten Klauen 14 ineinander. Hierbei sitzt jeweils eine erste Klaue 12 im Zwischenraum zwischen zwei benachbarten zweiten Klauen 14. Jede zweite Klaue 14 sitzt im Zwischenraum zweier benachbarter erster Klauen 12 ein. Zwischen den jeweils benachbarten Klauen 12, 14 ist ein elastischer Kupplungskörper 15 angeordnet, sodass sich eine jede erste Klaue 12 an der jeweils in Rotationsrichtung der Wellenkupplung 10 nächstliegende zweiten Klaue 14 über den zwischenliegenden elastischen Kupplungskörper 15 abstützt.

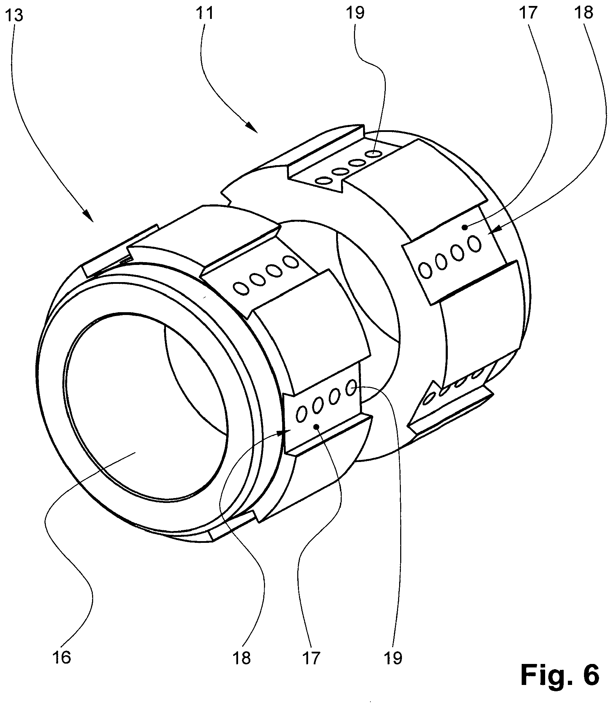

In Figur 6 ist die erste Nabe 11 und die zweite Nabe 13 in einer perspektivischen Ansicht ohne etwaige Zusatzbauteile dargestellt. Die jeweilige zentrale Ausnehmung 16 der Naben 11, 13 - die Nabenbohrung - dient der ortsfesten Anordnung auf je einer Welle. Beide Naben 11, 13 weisen eine im Wesentlichen kreiszylindrische Außenkontur auf, die von Montageflächen 17 unterbrochen ist. Im vorliegenden Ausführungsbeispiel der Figur 6 handelt es sich dabei um in den Außenumfang eingebrachte Nuten 18 mit einer ebenen Bodenfläche und zwei zur Bodenfläche senkrecht ausgebildeten Seitenwänden. Im Bereich der Nuten 18 sind Gewindebohrungen 19 angeordnet, die der Befestigung der ersten bzw. zweiten Klauen 12, 14 dienen.

Beide Nabe 11, 13 sind im Ausführungsbeispiel dem Grunde nach identisch. Sie sind jedoch zu einer Radialebene spiegelbildlich ausgerichtet. Hinsichtlich der Montageflächen sind sie zueinander Umfangsversetzt ausgerichtet.

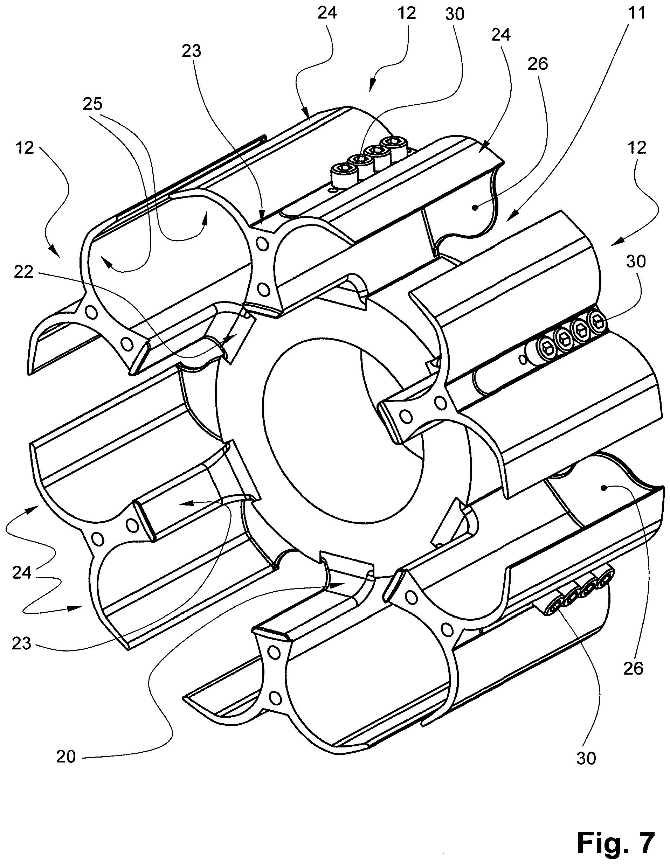

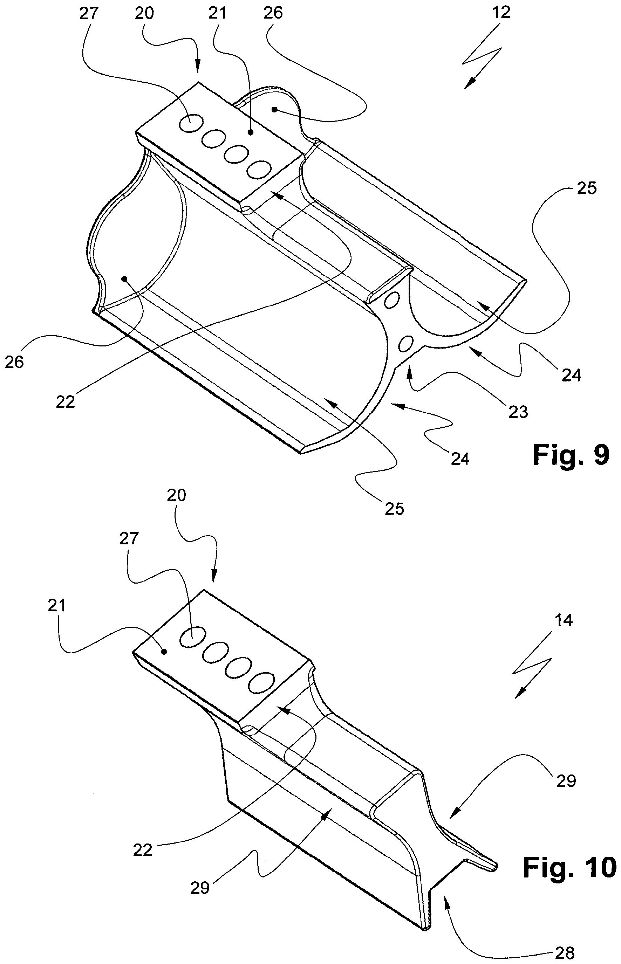

In Figur 9 ist eine erste Klaue 12 in einer perspektivischen Ansicht von unten dargestellt. Der Figur 9 ist zunächst zu entnehmen, dass die erste Klaue 12 einen Fuß 20 aufweist, der unterseitig - das heißt zur ersten Nabe 11 gewandt - eine Aufstandsfläche 21 ausbildet. Die Aufstandsfläche 21 entspricht in ihrer Abmessung der nabenseitigen Montagefläche 17. Da im vorliegenden Falle die Naben 11, 13 eine Montagenut 18 ausbilden, ist die klauenseitige Aufstandsfläche 21 Teil einer zur Nut 18 formkomplementären, den Fuß nach unten hin abschließenden Fußbasis 22. Bei Montage der ersten Klaue 12 in der Montagenut 18 der ersten Nabe 11 sitzt die Fußbasis 22 vollständig in der Nut 18 ein. Dies ist insbesondere der Figur 7 zu entnehmen, welche die erste Nabe 11 mit montierten ersten Klauen 12 in einer perspektivischen Gesamtansicht zeigt.

In Radialrichtung, in Figur 9 in die Papierebene hinein, entspringt der Fußbasis 22 ein zentraler Tragkörper 23, der darüber hinaus auch in Axialrichtung gegenüber der Fußbasis 22 vorsteht.

Dem Tragkörper 23 entspringen zwei Halteflügel 24. Einer der Halteflügel 24 erstreckt in Umfangsrichtung gegen den Uhrzeitersinn, der zweite erstreckt sich im Uhrzeigersinn. Gemeinsam mit dem Tragkörper 23 bilden die Halteflügel 24 jeweils eine im Wesentlichen schalenartig geformte Halteausnehmung 25, welche an wenigstens einem ihrer axialen Enden mit einer in einer Radialebene angeordneten axialen Endwand 26 versehen sind.

Im Bereich des Fußes 20 sind radial durch den Tragkörper 23 getriebene Haltebohrungen 27 angeordnet, die in Anzahl und Ausrichtung mit den Gewindebohrungen 19 der ersten Nabe 11 fluchten. Aus gemeinsamer Betrachtung der Figuren 7 und 9 wird ersichtlich, dass die erste Klaue 12, insbesondere deren Halteausnehmungen 25 zu einer ihrem Ursprung in der Rotationsachse habenden Axialebene spiegelsymmetrisch aufgebaut sind.

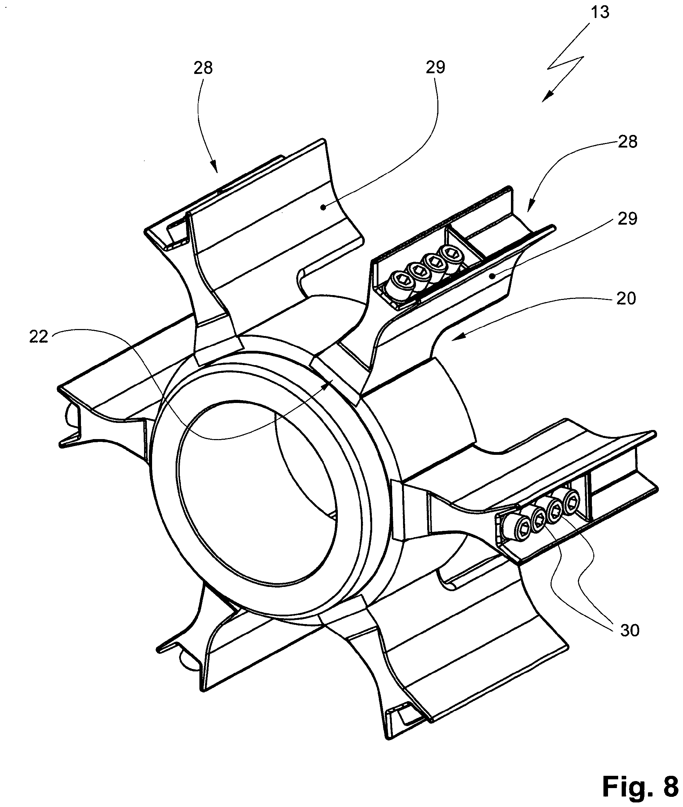

Figur 10 zeigt eine zweite Klaue 14 in perspektivischer Ansicht von unten. Figur 8 zeigt die zugehörige zweite Nabe 13 mit den umfangsverteilt montierten zweiten Klauen 13.

Wie schon die erste Klaue 12, verfügt auch die zweite Klaue 14 zunächst über einen Fuß 20 dessen zur Nabe gewandte Unterseite eine Aufstandsfläche 21 ausbildet. Da auch die zweite Nabe 13 Montagenuten 18 aufweist, ist die Aufstandsfläche 21 Teil einer nutkomplementären Fußbasis 22.

Ein der Fußbasis 22 radial, in Figur 10 in die Papierebene hin entspringender Klauenkörper 28 steht gegenüber der Fußbasis 22 axial vor.

Auch die zweite Klaue 14 ist im Bereich der Fußbasis 22 von radialen Haltebohrungen 27 durchsetzt, die in Anzahl und Ausrichtung mit den Gewindebohrungen 19 in der Montagenut 18 der ersten Nabe 13 fluchten. Die in Umfangsrichtung weisenden Seitenflächen 29 der zweiten Klaue 14 sind konkav eingesenkt und bilden so je einen Sitz für die rollen- bzw. walzenartigen, elastischen Klauenkörper 15.

Die Figuren 7 und 8 zeigen, dass mehrere erste bzw. zweite Klauen 12, 14 gleichmäßig außenumfänglich auf der jeweils ersten bzw. zweiten Nabe 11, 13 angeordnet sind. Zwischen den ersten bzw. zweiten Klauen 12, 14 sind Zwischenräume gebildet. Dabei sind die Zwischenräume zwischen den ersten Klauen 12 so bemessen, dass die zweiten Klauen 14 dort einsitzen können. Ebenso können die ersten Klauen 12 in den Zwischenräumen zwischen den zweiten Klauen 14 einliegen. Wie aus den Figuren 7 und 8 ebenfalls ersichtlich ist, sind sowohl die ersten wie die zweiten Klauen 12, 14 mittels Schraubbolzen 30 auf der jeweiligen Nabe 11, 13 befestigt. Die Schraubbolzen durchgreifen hierzu die Haltebohrungen 27 der Klauen 12, 14 und sind in den Gewindebohrungen 19 der Naben 11, 13 verschraubt.

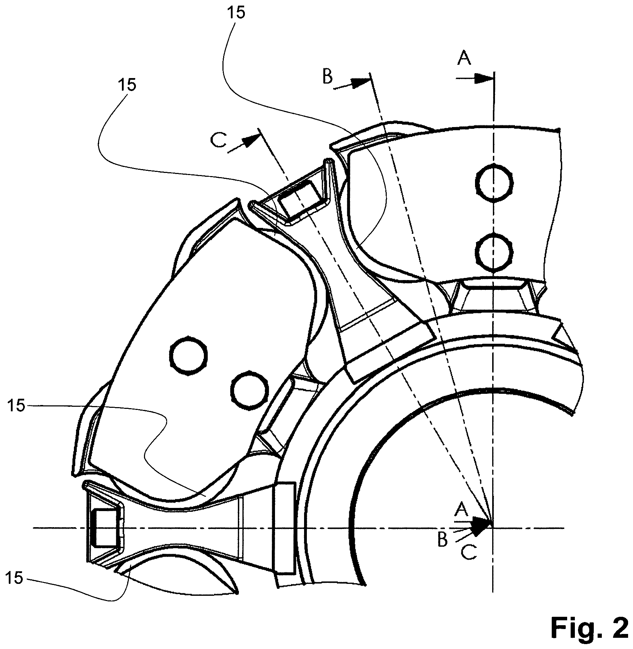

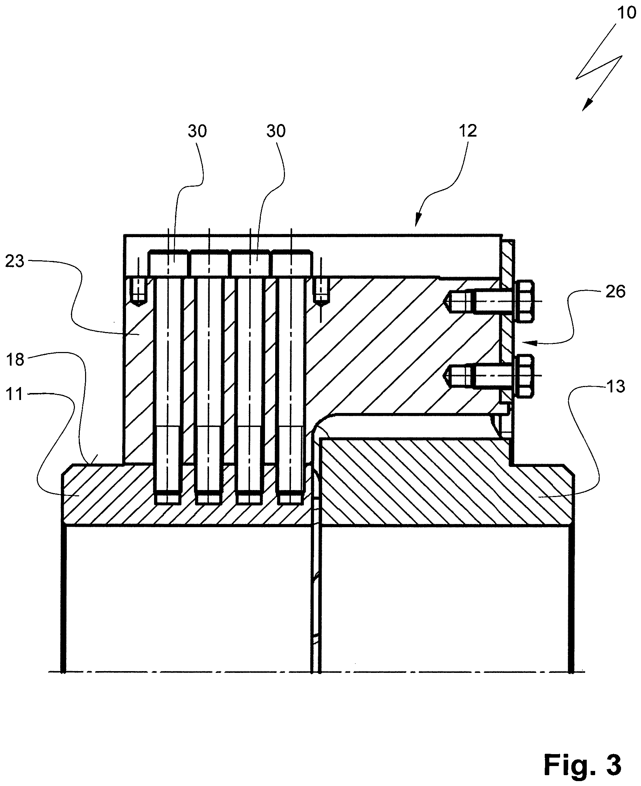

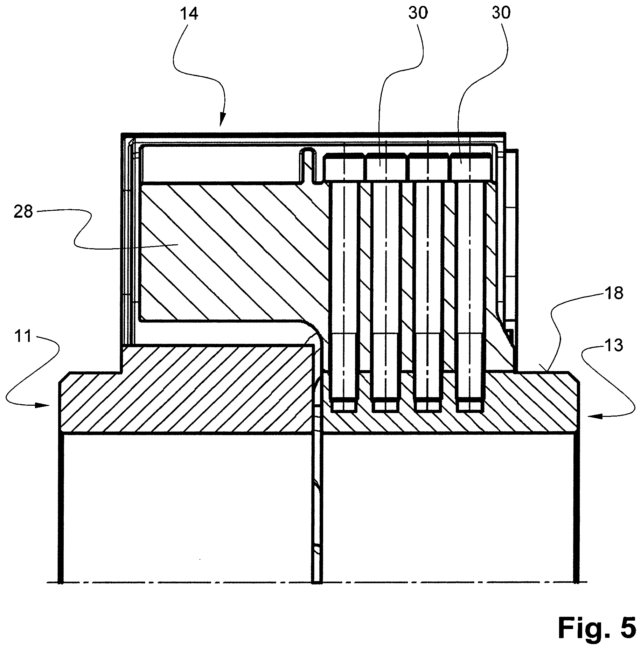

Dieser Sachverhalt geht auch sehr gut aus den Figuren 3 und 5 hervor. Figur 3 ist hierbei eine axiale Schnittansicht gemäß Schnittebene A - A in Figur 2, also durch die erste Klaue 12. Der Figur 3 ist darüber hinaus zu entnehmen, dass der gegenüber dem Fuß 20 axial vorspringende Bereich des Tragkörpers 23 mit seinen Halteflügeln 24 in den Radialraum der zweiten Nabe 13 eintaucht.

Figur 5 ist ebenfalls eine axiale Schnittansicht hier jedoch gemäß Schnittebene C - C in Figur 2. Es handelt sich somit um einen Axialschnitt durch die zweite Klaue 14. Neben der Festlegung der zweiten Klaue 14 an der zweiten Nabe 13 durch die radial gesetzten Schraubbolzen 30 ist darüber hinaus zu erkennen, dass der gegenüber der Fußbasis 22 vorspringende Axialbereich des Klauenkörpers 28 in den Radialraum der ersten Nabe 11 eintaucht.

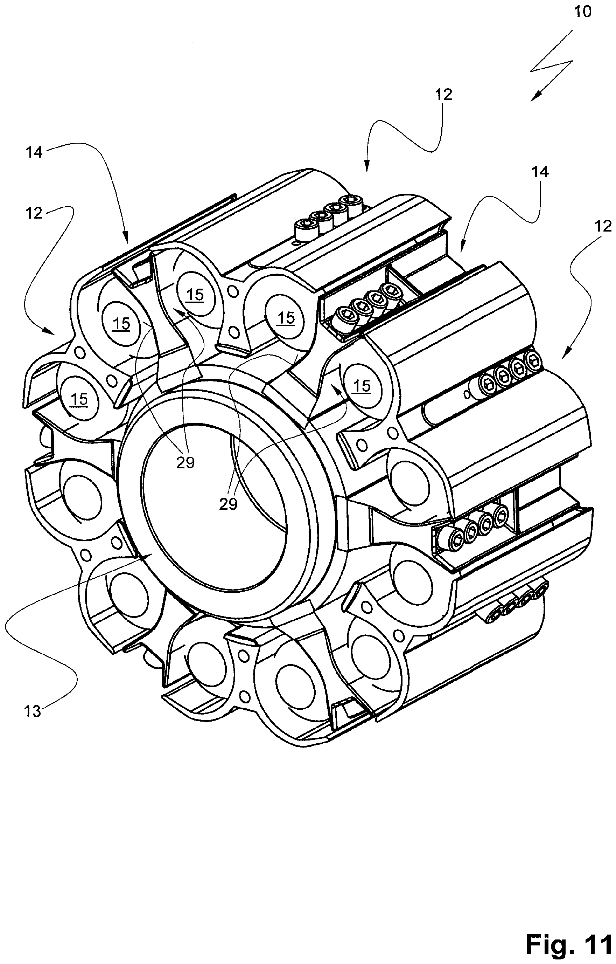

Das gegenseitige Eintauchen von erster Klaue 12 und zweiter Klaue 14 in die Radialräume von zweiter Nabe 13 und erster Nabe 11 führt zu der in Figur 2 bzw. Figur 11 dargestellten Montagesituation, in welcher die ersten Klauen 12 in den Zwischenräumen der zweiten Klauen 14 und die zweiten Klauen 14 in den Zwischenräumen der ersten Klauen 12 einliegen.

Zur Dämpfung befinden sich rollen- bzw. walzenartige, elastische Kupplungskörper 15 zwischen benachbarten ersten und zweiten Klauen 12, 14. Diese werden gegen Axial- wie Radialverschiebung ausschließlich von dem ersten Klauen 12 gehalten, in deren Halteausnehmungen 25 die elastischen Kupplungskörper 15 einliegen. Die durch ihre konkave Ausformung einen Sitz bildenden Seitenflächen 29 der zweiten Klauen 14 halten die elastischen Kupplungskörper 15 in Umfangsrichtung in den Halteausnehmungen 25 der ersten Kupplungskörper 15. Die konkave Ausformung der Seitenflächen 29 ermöglicht ein flächiges Anliegen der elastischen Kupplungskörper 15 statt eines linienartigen Anliegens bei umgewölbten Seitenflächen 29. Dies führt zu einer Schonung der elastischen Kupplungskörper 15.

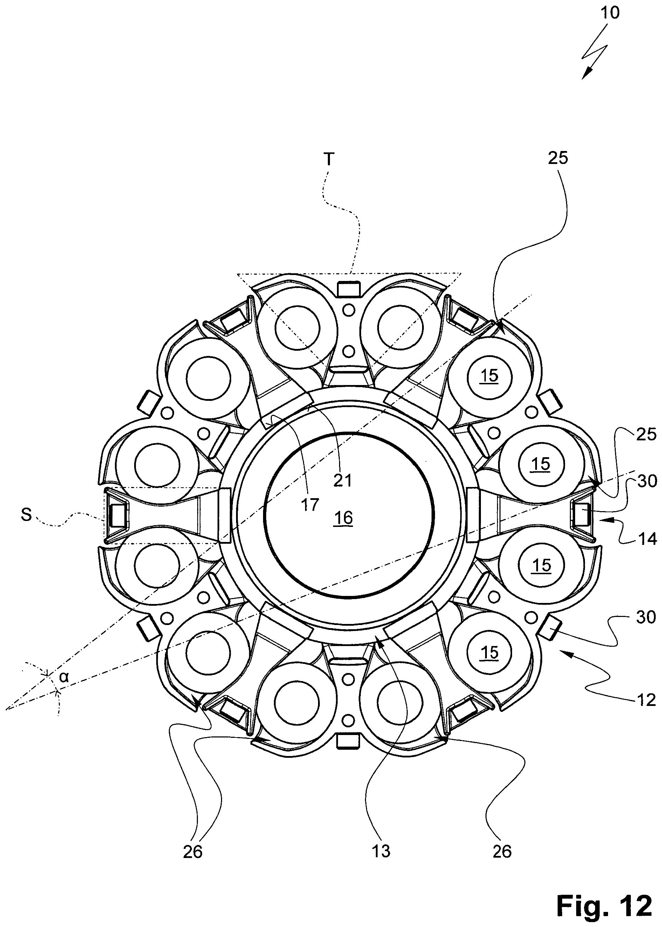

Figur 12 zeigt eine Axialansicht auf die zweite Nabe 13 Wellenkupplung 10 in Figur 11. Neben der Radialbefestigung der ersten und zweiten Klauen 12, 14 mittels Schraubbolzen 30 ist dieser Darstellung zunächst das Einsitzen der elastischen Kupplungskörper 15 in den Halteausnehmungen 25 der ersten Kupplungselemente 12 deutlich entnehmbar. Erkennbar ist darüber hinaus, dass die Halteflügel 24 die Kupplungskörper 15 in Radialrichtung halten. In Axialrichtung sind die Endwände 26 für die Axialsicherung verantwortlich. Von diesen sind hier nur die in Blickrichtung hinteren Wände 26 dargestellt, die vorn liegenden, im Montagezustand die Axialansicht auf die Kupplungselemente 15 verdeckenden Frontwände 31 sind weggebrochen.

Wie insbesondere aus der Fig. 1 ersichtlich, sind die Frontwände 31 lösbar an den ersten Klauen 12 schraubbefestigt. Jede erste Klaue 12 trägt eine ihre Halteausnehmungen 25 axial verschließende Frontwand 31. Dies ermöglicht es in vorteilhafter Weise die ersten Klauen 12 einzeln radial zu entnehmen oder aber - eine entsprechende Zugänglichkeit vorausgesetzt - die axiale Entnahme einzelner Kupplungskörper 15.

Alternativ können statt einzelner Frontwände 31 die Halteausnehmungen 25 der ersten Klauen 12 auch von einer Ringscheibe abgedeckt und axial verschlossen sein. Auch diese nicht dargestellte Ringscheibe wird an den ersten Klauen 12 schraubbefestigt. Der wesentliche Vorteil der Ringscheibe liegt in der Verbindung der ersten Klauen 12 untereinander. Diese Verbindung stabilisiert die ersten Klauen 12 gegen die wirkenden Fliehkräfte und entlastet die der Radialbefestigung dienenden Schraubbolzen 30. Nach dem Lösen der Schraubverbindung ist eine radiale Entnahme der ersten Klauen 12 weiterhin möglich.

Die Umfangskonturen in der Radialebene der Wellenkupplung 10 sind bei den ersten Kupplungskörpern 12 im Wesentlichen nach Art eines symmetrischen Trapezes geformt. Dies verdeutlicht die in Figur 12 eingezeichnete Umfangslinie T. Demgegenüber zeigen die zweiten Klauen 14 in der Radialebene, also in der hier vorliegenden Stirnansicht auf die zweite Klaue 14 eine im Wesentlichen rechteckige bzw. stegartige Umfangskontur. Diese ist durch die Umfangslinie S in Figur 12 symbolisiert.

Aus Figur 12 ist auch ersichtlich, dass die zweiten Klauen 14 keine Radialhaltefunktion für die elastischen Kupplungskörper 15 ausüben. Darüber hinaus zeigt Figur 12, dass der Öffnungswinkel α zweier benachbarter zweiter Klauen 14 die radiale Entnahme der dazwischen liegenden ersten Klaue 12 und somit die radiale Austauschbarkeit der elastischen Kupplungskörper 15 gewährleistet. Dieser Öffnungswinkel α ist für die konkrete Ausführungsform ebenfalls in Fig. 12 dargestellt. Bei der Vorliegenden Ausführungsform der zweiten Klauen 14 mit ihrem konkav eingesenkten, einen Sitz bildenden, in Umfangsrichtung weisenden Seitenwänden ist derjenige Öffnungswinkel α zu bestimmen, der zwischen den Wandabschnitten eingeschlossen ist, die hinsichtlich des Scheitelpunktes der konkaven Einsenkung radial außen angeordnet sind. Diese Wandabschnitte müssen zueinander parallel ausgerichtet sein - Öffnungswinkel α = 0 Grad - oder einen positiven Öffnungswinkel einschließen und demzufolge von der Rotationsachse aus betrachtet eine Art trichterförmige Öffnung bilden.

Soweit eine radiale Entnahme einzelner Kupplungskörper 15 oder einzelner Klauen 12, 14 nicht erforderlich ist, können Klauen 12, 14 abweichender und gleichartiger Form Verwendung finden, wie aus dem Stand der Technik hinlänglich bekannt.

Zusammenfassend wurde eine Wellenkupplung 10 offenbart, die dank einheitlicher Montageflächen 17 die Anordnung standardisierter Klauen 12, 14 unabhängig vom Nabendurchmesser ermöglicht. Darüber hinaus wurden mit der wechselweisen Anordnung von steg- und trapezartigen Klauenkörpern und der Haltefunktion der trapezartigen Klauen 12 für unverbundene Kupplungskörper 15 gezeigt, dass eine radiale Austauschbarkeit von Kupplungskörpern 15 möglich ist.

### Bezugszeichenliste:

- 10: Wellenkupplung
- 11: erste Nabe
- 12: erste Klaue
- 13: zweite Nabe
- 14: zweite Klauen
- 15: elastischer Kupplungskörper
- 16: zentrale Ausnehmung
- 17: Montagefläche
- 18: Nut
- 19: Gewindebohrung
- 20: Fuß
- 21: Aufstandsfläche
- 22: Fußbasis
- 23: Tragkörper
- 24: Halteflügel
- 25: Halteausnehmung
- 26: axiale Endwand
- 27: Haltebohrung
- 28: Klauenkörper
- 29: Seitenfläche
- 30: Schraubbolzen
- 31: axiale Frontwand

- T: Umfangslinie der ersten Klaue
- S: Umfangslinie der zweiten Klaue

## Patentansprüche

1. Elastische Wellenkupplung (10) mit einer ersten kreiszylindrischen Wellennabe (11), die über ihren radial weisenden Außenumfang verteilte und zueinander beabstandete erste Klauen (12) trägt und mit einer zweiten kreiszylindrischen Wellennabe (13), die über ihren radial weisenden Außenumfang verteilte und zueinander beabstandete zweite Klauen (14) trägt, wobei die ersten und zweiten Klauen (12, 14) durch Einsitzen in den jeweiligen Zwischenräumen ineinandergreifen und zwischen jeweils benachbarten Klauen (12, 14) ein elastisches Kupplungselement (15) einsitzt, **dadurch gekennzeichnet, dass**
- wenigstens die kreiszylindrische Außenumfangsfläche einer Nabe (11, 13) mit radial weisenden Montageflächen (17) für die Klauen (12, 14) versehen ist,
- die von der Nabe (11, 13) getragenen Klauen (12, 14) formschlüssig auf der nabenseitigen Montageflächen (17) aufsitzen
- zumindest die erste Klaue (12) radial entfernbar ist.

2. Wellenkupplung nach Anspruch 1, **dadurch gekennzeichnet, dass** die Montagefläche (17) plan ausgebildet ist.

3. Wellenkupplung nach Anspruch 1 oder 2, **dadurch gekennzeichnet, dass** die Montagefläche (17) eine Nut (18) aufweist.

4. Wellenkupplung nach einem der Ansprüche 1 bis 3, **dadurch gekennzeichnet, dass** die Klauen (12, 14) Aufstandsflächen (21) aufweisen, die formkomplementär zu den nabenseitigen Montageflächen (17) ausgebildet sind.

5. Wellenkupplung nach einem der Ansprüche 1 bis 3, **dadurch gekennzeichnet, dass** die ersten Klauen (12) schalenartige, zu einer Axialebene der Wellenkupplung (10) spiegelbildlich angeordnete
Halteasunehmungen (25) aufweisen die untereinander unverbundene elastische Kupplungselemente (15) radial und/oder axial halten.

6. Wellenkupplung nach Anspruch 5, **dadurch gekennzeichnet, dass** die zweiten Klauen (14) einen formangepassten Sitz für die elastischen Kupplungselemente (15) ausbilden.

7. Wellenkupplung nach Anspruch 5 oder 6, **dadurch gekennzeichnet, dass** die zweiten Klauen (14) die elastischen Kupplungselemente (15) in Umfangsrichtung in den Halteausnehmungen (25) der ersten Kupplungselemente (12) halten.

8. Wellenkupplung nach einem der Ansprüche 5 bis 7, **dadurch gekennzeichnet, dass** in einem Radialschnitt die ersten Klauen (12) im Wesentlichen symmetrische Trapeze bilden und die zweiten Klauen (14) im Wesentlichen stegartig ausgebildet sind und ihren geometrischen Ursprung in der Rotationsachse der Wellenkupplung (10) haben.

9. Wellenkupplung nach einem der Ansprüche 5 bis 8, **dadurch gekennzeichnet, dass** der radiale Öffnungswinkel der zweiten Klauen (14) eine radiale Entnahme der ersten Klauen (12) nebst der von Ihnen gehaltenen elastischen Kupplungselemente (15) ermöglicht.

10. Wellenkupplung nach einen der vorhergehenden Ansprüche, **dadurch gekennzeichnet, daß** die erste und oder zweite Nabe (11, 13) kreiszylindrisch ausgebildet sind und die kreiszylindrische Außenumfangsfläche im Bereich der Montageflächen (17) von der kreiszylindrischen Kontur abweichend ausgebildet ist.

## Claims

1. Elastic shaft coupling (10) having a first circular cylindrical shaft hub (11) which bears first jaws (12) distributed over its radial outer circumference and spaced apart from one another, and having a second circular cylindrical shaft hub (13) which bears second jaws (14) distributed over its radial outer circumference and spaced apart from one another, wherein the first and second jaws (12, 14) interlock by sitting in the respective intermediate spaces and an elastic coupling element (15) sits between each of the adjacent jaws (12, 14), **characterised in that**
- at least the circular cylindrical outer circumference surface of one hub (11, 13) is provided with radial mounting surfaces (17) for the jaws (12, 14),
- the jaws (12, 14) borne by the hub (11, 13) sit in a form-fitting manner on the hub-side mounting surfaces (17),
- at least the first jaws (12) can be radially removed.

2. Shaft coupling according to claim 1, **characterised in that** the mounting surface (17) is formed flat.

3. Shaft coupling according to claim 1 or 2, **characterised in that** mounting surface (17) has a groove (18).

4. Shaft coupling according to any one of claims 1 to 3, **characterised in that** the jaws (12, 14) have contact surfaces (21) which are formed in complimentary shapes to the hub-side mounting surfaces (17).

5. Shaft coupling according to any one of claims 1 to 3, **characterised in that** the first jaws (12) have cup-like retaining recesses (25) arranged mirror-inverted to an axial plane of the shaft coupling (10) which radially and/or axially hold the mutually unconnected elastic coupling elements (15).

6. Shaft coupling according to claim 5, **characterised in that** the second jaws (14) form a shape-adapted seat for the elastic coupling elements (15).

7. Shaft coupling according to claim 5 or 6, **characterised in that** the second jaws (14) hold the elastic coupling elements (15) in the peripheral direction in the retaining recesses (25) of the first coupling elements (12).

8. Shaft coupling according to any one of claims 5 to 7, **characterised in that** in a radial section the first jaws (12) form substantially symmetrical trapezoids and the second jaws (14) are formed substantially web-shaped and have their geometric origin in the axis of rotation of the shaft coupling (10).

9. Shaft coupling according to any one of claims 5 to 8, **characterised in that** the radial opening angle of the second jaws (14) facilitates a radial removal of the first jaws (12) together with the elastic coupling elements (15) held by them.

10. Shaft coupling according to any one of the preceding claims, **characterised in that** the first and/or second jaws (11, 13) are formed circular cylindrically and the circular cylindrical outer circumference surface in the region of the mounting surfaces (17) is formed deviating from the circular cylindrical contour.

## Revendications

1. Accouplement d'arbre élastique (10) comportant un premier moyeu cylindrique circulaire (11) qui porte des premières griffes (12) réparties sur sa circonférence extérieure orientée radialement et espacées les unes des autres, et comportant un second moyeu d'arbre cylindrique circulaire (13), qui porte des secondes griffes (14) réparties sur sa circonférence extérieure orientée radialement et espacées l'une de l'autre, les première et seconde griffes (12, 14) s'engageant l'une dans l'autre en étant placées dans les espaces respectifs et un élément d'accouplement élastique (15) étant placé entre chaque griffe adjacente (12, 14), **caractérisé en ce que**
- au moins la surface circonférentielle extérieure cylindrique circulaire d'un moyeu (11, 13) est munie de surfaces de montage (17) orientées radialement pour les griffes (12, 14),
- les griffes (12, 14) portées par le moyeu (11, 13) reposent à forme finale sur les surfaces de montage (17) côté moyeu et au moins la première griffe (12) est amovible radialement.

2. Accouplement d'arbre selon la revendication 1, **caractérisé en ce que** la surface de montage (17) est plane.

3. Accouplement d'arbre selon la revendication 1 ou 2, **caractérisé en ce que** la surface de montage (17) présente une rainure (18).

4. Accouplement d'arbre selon l'une quelconque des revendications 1 à 3, **caractérisé en ce que** les griffes (12, 14) comportent des surfaces de contact (21) de forme complémentaire aux surfaces de montage (17) côté moyeu.

5. Accouplement d'arbre selon l'une quelconque des revendications 1 à 3, **caractérisé en ce que** les premières griffes (12) comportent des éléments de fixation (25) en forme de coquille, disposés en miroir inversé sur un plan axial de l'accouplement d'arbre (10) et maintenant ensemble, radialement et/ou axialement, des éléments élastiques (15) non reliés entre eux.

6. Accouplement d'arbre selon la revendication 5, **caractérisé en ce que** les secondes griffes (14) forment un emplacement adapté pour la forme des éléments flexibles (15) de l'accouplement.

7. Accouplement d'arbre selon la revendication 5 ou 6, **caractérisé en ce que** les secondes griffes (14) maintiennent les éléments d'accouplement flexibles (15) dans la direction périphérique dans les évidements de maintien (25) des premiers éléments d'accouplement (12).

8. Accouplement d'arbre selon l'une quelconque des revendications 5 à 7, **caractérisé en ce que** dans une section radiale, les premières griffes (12) forment des trapèzes essentiellement symétriques et les secondes griffes (14) sont essentiellement en forme de bande et ont leur origine géométrique dans l'axe de rotation de l'accouplement (10).

9. Accouplement d'arbre selon l'une quelconque des revendications 5 à 8, **caractérisé en ce que** l'angle d'ouverture radial des secondes griffes (14) permet d'enlever radialement les premières griffes (12) avec les éléments d'accouplement élastiques (15) qu'elles contiennent.

10. Accouplement d'arbre selon l'une quelconque des revendications précédentes, **caractérisé en ce que** les premier et ou second moyeux (11, 13) sont de forme cylindrique circulaire et la surface périphérique extérieure cylindrique circulaire dans la zone des surfaces de montage (17) est de forme différente du contour cylindrique circulaire.
